# EUROPÄISCHE PATENTSCHRIFT

(11) **EP 0 819 226 B1**
(45) Veröffentlichungstag und Bekanntmachung des Hinweises auf die Patenterteilung: **16.06.1999**
(21) Anmeldenummer: 96909014.1
(22) Anmeldetag: 03.04.1996
(51) Int. Cl.: F16G 13/16

(54) **ENERGIEKETTE**
CHAIN-TYPE CASING
CHAINE DE GUIDAGE

(30) Priorität: 03.04.1995 DE 19512088
(43) Veröffentlichungstag der Anmeldung: 21.01.1998
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Patentanwälte Lippert, Stachow, Schmidt & Partner
(86) Internationale Anmeldenummer: DE9600588
(87) Internationale Veröffentlichungsnummer: WO9631711

(56) Entgegenhaltungen:
- EP-A- 0 154 882
- EP-A- 0 286 442
- EP-A- 0 544 027
- DE-C- 3 928 233
- DE-C- 4 428 680
- FR-A- 2 540 208
- GB-A- 1 431 382
- PATENT ABSTRACTS OF JAPAN vol. 9, no. 124 (M-383) [1847] , 29.Mai 1985 & JP,A,60 008543 (HAAMO K.K.), 17.Januar 1985,

## Beschreibung

Die Erfindung betrifft eine Energiekette zur Führung von Schläuchen, Kabeln oder dergleichen zwischen einem festen und einem beweglichen Anschlußpunkt, deren Kettenglieder eine leichte, dünnwandige Konstruktion aus jeweils zwei Kettenlaschen und mindestens einem diese verbindenden Quersteg aufweisen, wobei die Kettenlaschen benachbarter Kettenglieder durch an den Laschen jeweils eines Kettenglieds angeformte Zapfen, die durch korrespondierende Öffnungen in den Laschen des anderen Kettenglieds greifen, gelenkig miteinander verbunden sind und wobei die Energiekette eine verdreheleastische und/oder in seitlicher Richtung biegeelastische Konstruktion aufweist und zum Einfügen der Zapfen eines Kettenglieds in die Öffnungen des benachbarten Kettenglieds eine elastische Verformung der betreffenden Laschenbereiche erforderlich ist.

Eine derartige Energiekette eignet sich zur leichten und flexiblen Führung der darin gelagerten Schläuche, Kabel c. dgl. mit niedrigen Gewichten und ermöglicht mit kurzen Teilungslängen der Kettenglieder einen nahezu kreisrunden Verlauf der gegeneinander abgewinkelten Kettenglieder. Eine verdrehelastische und/oder seitlich biegeelastische Konstruktion liegt insbesondere bei offenen oder halboffenen Ketten oder Ketten mit durchbrochenen oder zu öffnenden Querstegen vor. Die Kettenglieder, deren Kettenlaschen üblicherweise gekröpft ausgebildet sind und sich symmetrisch gegenüberliegen, wobei an der Außenseite des einwärts gekröpften Bereichs nach außen stehende Zapfen angeformt sind und die zu den Zapfen korrespondierenden Öffnungen sich im auswärts gekröpften Bereich befinden, können auf einfache Weise gelenkig miteinander verbunden werden. Dazu werden die betreffenden Laschenbereiche elastisch verformt, so daß die Zapfen eines Kettenglieds in die Öffnungen des benachbarten Kettenglieds einrasten können.

Obwohl aufgrund der genannten Konstruktion keine Nachteile zu erwarten sind, hat sich herausgestellt, daß unter bestimmten Belastungen einer derartigen Energiekette sich die Rastverbindungen zwischen den Zapfen und Öffnungen der Kettenlaschen lösen können. Die Anmelderin hat sich daher die Aufgabe gestellt, mit einfachen technischen Mitteln ein Lösen der Gelenkverbindung zwischen den Kettengliedern der eingangs genannten Energiekette zu vermeiden.

Eine derartige Energiekette ist beispielsweise aus Patent Abstracts of Japan vol. 9, No. 124 (M-383 60-8543 A) bekannt. Die in dieser Druckschrift beschriebenen Kettenglieder sind solche, deren Laschen durch untere stabile Querstege fest miteinander verbunden sind. Die Querstege sind einstückig angeformt, so daß es zur Verbindung benachbarter Kettenglieder erforderlich ist, die einwärts gekröpften Bereiche einer Lasche mit nach außen stehenden Zapfen ein Stück einwärts zusammenzudrücken und gleichzeitig die auswärts gekröpften Bereiche der Laschen des benachbarten Kettengliedes, welche mit Löchern versehen sind, ein Stück auseinanderzubiegen, so daß die Zapfen eines Kettenglieds in die Öffnungen des benachbarten Kettenglieds einrasten können.

Aus der EP 0 286 442 ist eine Energiekette bekannt, deren Kettenglieder einwärts gerichtete Hohlzapfen aufweisen, die an ihrem Umfang Rastmittel aufweisen, mit denen diese rastend in entsprechende Öffnungen eingreifen. Die dort beschriebene Energieführungskette besteht aus Gliedern, die jeweils aus zwei Laschen und zwei lösbar befestigten Querstegen besteht. Die Laschenstränge der Energiekette werden durch die oberen und unteren Querstege sicher zusammengehalten, die mit Rastmitteln versehenen Hohlzapfen dienen ausschließlich der Vormontage der Laschenstränge, der letztendliche Zusammenhalt der Kette wird durch die aufgesetzten oberen und unteren Querstege bewirkt. Eine Kette gemäß Oberbegriff von Anspruch 1 ist in der EP 0 286 442 nicht beschrieben.

Ähnliche Konstruktionen sind beispielsweise aus der GB,A,1 431 382 sowie aus der EP,A,0 154 882 bekannt. Es handelt sich hier ebenfalls nicht um verdrehelastische und/oder biegeelastische Konstruktionen, bei denen eine elastische Verformung der Laschenbereiche bei der Herstellung der Verbindung zwischen den einzelnen Kettengliedern erforderlich ist.

Der Erfindung liegt daher die Aufgabe zugrunde, bei einer Energiekette gemäß Oberbegriff von Anspruch 1 mit einfachen technischen Mitteln ein Lösen der Gelenkverbindung zwischen den Kettengliedern zu vermeiden.

Die Aufgabe wird erfindungsgemäß dadurch gelöst, daß die Zapfen als zusätzliche Sicherung gegen unbeabsichtigtes Lösen bei Beanspruchung der Kette an ihrem Umfang Rastmittel aufweisen, mit denen die Zapfen rastend in die Öffnungen eingreifen und unter Aufbringung einer bestimmten Kraft aus den Öffnungen wieder lösbar sind.

Es hat sich herausgestellt, daß aufgrund der erfindungsgemäßen zusätzlichen Rastverbindung zwischen den Zapfen und Öffnungen ein optimaler Halt der Gelenkverbindungen zwischen den Kettengliedern auch bei größeren Belastungen gewährleistet ist. Dabei kommen folgende technische Zusammenhänge zum Tragen. Insbesondere bei längerem frei schwebendem Obertrum und entsprechenden Gewichten sowie bei schnellem Verfahren derartiger Energieketten und entsprechenden Trägheitskräften wirken starke Zug- und Druckspannungen auf die Zapfen und die Wände der Öffnungen der Gelenkverbindungen. Geringste Abweichungen der Lage der aneinanderliegenden Flächen der Kettenlaschen aus der zur Kraftrichtung exakt parallelen Lage bewirken eine senkrecht zu den Laschen gerichtete Kraftkomponente, die zu einem Aufspreizen der Laschen im Bereich der Gelenkverbindungen führt. Schon bei geringer Aufspreizung steigen die Spreizkräfte in nichtlinearer Weise an, so daß sie Rastverbindungen zwischen den Zapfen und Öffnungen leicht überwinden würden. Überraschenderweise hat sich jedoch gezeigt, daß die erfindungsgemäß am Umfang der Zapfen vorgesehenen Rastmittel die Entstehung von Spreizkräften schon in der Anfangsphase verhindern oder auf einem so niedrigen Betrag halten, daß sich die Gelenkverbindungen nicht lösen können. Hierzu trägt entscheidend bei, daß die Kettenlaschen durch die Rastmittel am Umfang der Zapfen zu einer genauen linearen Ausrichtung gezwungen werden. Da die Kunststoffteile eine ihnen aufgezwungene Form annehmen, führt die erfindungsgemäße Lösung zu einer parallelen Ausrichtung aller aneinanderliegenden Teile der Kettenlaschen, so daß die Entstehung quergerichteter Kräfte bei Zug- oder Druckbeanspruchung der Energiekette weitestgehend vermieden werden.

In einer bevorzugten Ausführung der Erfindung liegen die im Gelenkbereich gegenüberliegenden Laschen ohne axiales Spiel aneinander an. Insbesondere kann vorgesehen sein, daß die Rastmittel am Umfang der Zapfen die im Gelenkbereich aneinanderliegenden Laschen unter einer geringen Vorspannung aneinanderdrücken. Dadurch wird die parallele Ausrichtung der aneinanderliegenden Kettenlaschen aufgrund der ihnen aufgezwungenen Form noch verbessert.

Die an den Zapfen vorgesehenen Rastmittel sind vorzugsweise als an den freien Enden der Zapfen angeordnete radiale Vorsprünge ausgebildet. Diese können als umlaufende Verbreiterungen gestaltet sein. Die Verbreiterungen weisen zweckmäßigerweise eine bauchige Oberfläche auf, die sich von einem zylinderförmigen Teil des Zapfens aus erstreckt.

Bei dieser Ausbildung der Zapfen weisen die Öffnungen an ihren außenliegenden Enden bevorzugt Erweiterungen auf, in die sich die an den freien Enden der Zapfen angeordneten radialen Vorsprünge erstrecken. Auf diese Weise kann erreicht werden, daß die Stirnseite der Zapfen mit der Außenseite der Laschen im wesentlichen fluchtend angeordnet ist, so daß sich ingesamt eine weitgehend glatte äußere Oberfläche des Laschenstrangs ergibt.

Andererseits können die an den Zapfen vorgesehenen Rastmittel zum Beispiel auch als umlaufende Nuten ausgebildet sein, in die entsprechende ringförmige Vorsprünge in den Öffnungen greifen. Diese Rastverbindung kann ebenfalls so ausgelegt sein, daß die Stirnseite der Zapfen mit der Außenseite der Laschen fluchtend angeordnet ist.

Die Erfindung eignet sich insbesondere für Ketten, deren Kettenglieder einen oberen und unteren Quersteg aufweisen, wobei einer dieser Querstege zum einfachen Einlegen der Schläuche, Kabel o. dgl. unterbrochen ist. Aufgrund der unterbrochenen Querstege neigen die Kettenglieder bei Zug- oder Druckbeanspruchung zum Aufspreizen der Laschen, was durch die am Umfang der Zapfen angeordneten Rastmittel vermieden wird. Somit wird ein größeren Beanspruchungen genügender Halt der Gelenkverbindung insbesondere dann erreicht, wenn die beiden Teile des unterbrochenen Querstegs auf gleicher Höhe verlaufen und durch einen schmalen Spalt voneinander getrennt sind. Andererseits kann ein Teil des unterbrochenen Querstegs an seinem dem anderen Teil gegenüberliegenden Ende eine stufenförmige Absenkung aufweisen, die sich unter das gegenüberliegende Ende des anderen Teils erstreckt. In einem dritten Beispiel können die beiden Teile des unterbrochenen Querstegs auf unterschiedlicher Höhe verlaufen, so daß ihre Enden übereinanderliegend angeordnet sind.

Um den Halt der Gelenkverbindung bei Kettengliedern mit unterbrochen Querstegen noch weiter zu verstärken, können die Kettenlaschen und der diese verbindende, durchgehende Quersteg einerseits und der unterbrochene Quersteg andererseits aus zwei unterschiedlichen Werkstoffen hergestellt werden. Während die Kettenlaschen und der durchgehende Quersteg aus einem relativ steifen Werkstoff bestehen, kann der unterbrochene Quersteg aus einem relativ weichelastischen, federnden Werkstoff gefertigt sein. Somit hat das Kettenglied trotz des weichelastischen, federnden Querstegs zum einfachen Einlegen der Schläuche, Kabel o. dgl. aufgrund des relativ steifen Werkstoffs eine ausreichende Stabilität, die in Verbindung mit den an den Zapfen vorgesehenen radialen Rastvorsprüngen einen zuverlässigen Halt der Gelenkverbindungen gewährleistet.

Im folgenden ist die Erfindung in der Zeichnung beispielhaft veranschaulicht und anhand der Zeichnung näher beschrieben. Es zeigen:
- Fig. 1: eine Draufsicht auf ein Kettenglied,
- Fig. 2: einen längsgerichteten Schnitt entlang der Linie II-II in Fig. 1,
- Fig. 3: eine stirnseitige Ansicht des in Fig. 1 gezeigten Kettengliedes,
- Fig. 4: eine vergrößerte Darstellung des in Fig. 3 durch einen Kreisbogen umrissenen Bereichs des oberen Querstegs,
- Fig. 5: eine obere Draufsicht auf eine andere Ausführung des oberen Querstegs im Trennungsbereich,
- Fig. 6: eine stirnseitige Ansicht auf ein anderes Ausführungsbeispiel des unterbrochenen Querstegs eines Kettengliedes und
- Fig. 7: eine obere Draufsicht auf eine andere Ausführung des oberen Querstegs im Trennungsbereich

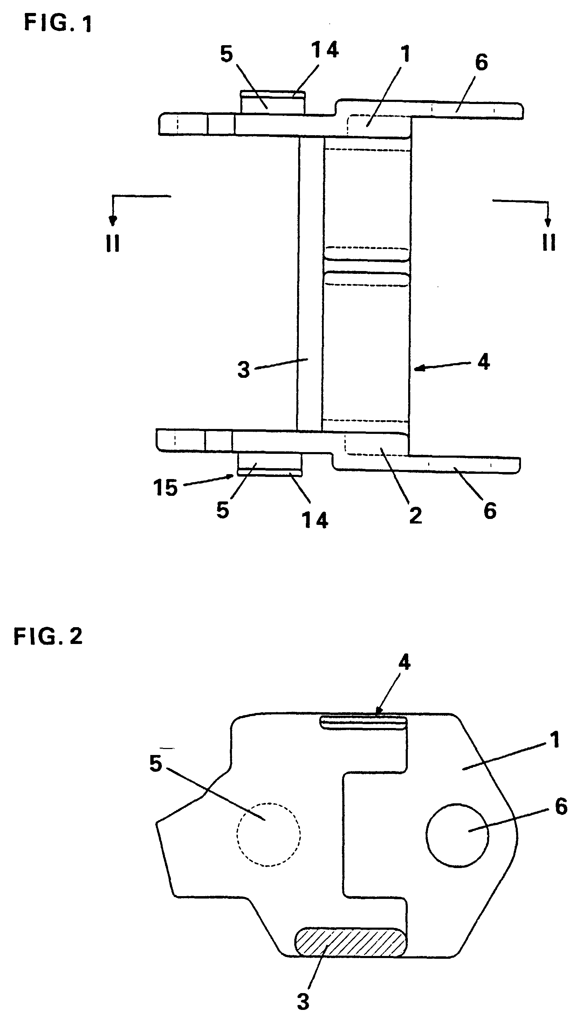

Das in den Fig. 1-3 dargestellte Kettenglied einer Energiekette besteht im wesentlichen aus zwei Kettenlaschen 1 und 2 sowie einem unteren, die beiden Kettenlaschen 1 und 2 verbindenden Quersteg 3 und einem oberen Quersteg 4.

In dem betrachteten Ausführungsbeispiel eines Kettengliedes sind die Kettenlaschen 1 und 2 gekröpft ausgebildet, wobei an der Außenseite des einwärts gekröpften Bereichs (auf der linken Seite der Fig. 1 und 2 dargestellt) auswärts gerichtete Zapfen 5 angeformt sind, die sich durch korrespondierende Öffnungen 6 im auswärts gekröpften Bereich (auf der rechten Seite der Fig. 1 und 2 dargestellt) eines benachbarten Kettengliedes erstrecken und somit eine gelenkige Verbindung zwischen den benachbarten Kettengliedern der Energiekette herstellen.

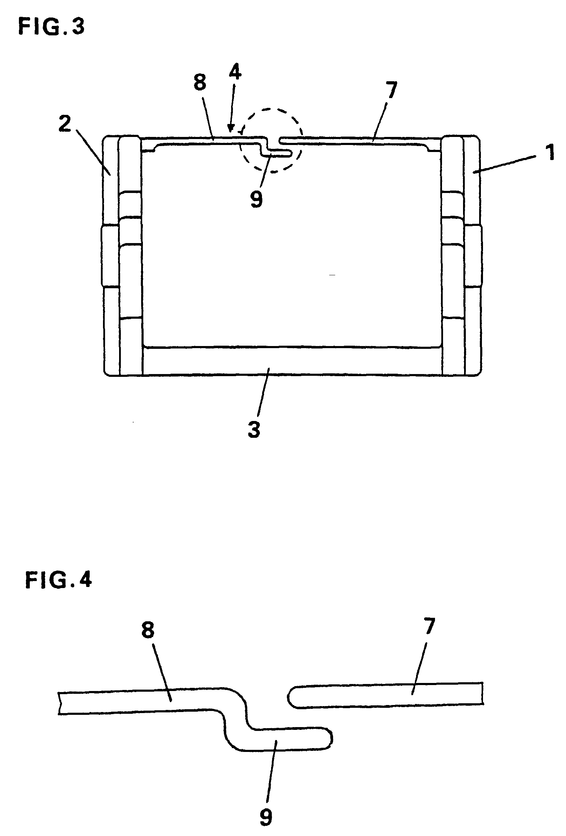

Wie im einzelnen aus den Fig. 1-4 hervorgeht, weist der obere Quersteg 4 in seinem mittleren Bereich eine Unterbrechung auf. Diese ermöglicht ein Eindrücken der beiden Stegteile 7 und 8 von oben beim Einlegen von Schläuchen, Kabeln oder anderen Leitungen in die Kettenglieder. Aufgrund der relativ geringen Stärke der Stegteile 7 und 8 und des für diese verwendeten flexiblen Materials geben die Stegteile 7 und 8 beim Eindrükken relativ leicht nach, wodurch genügend Platz für das Einlegen der Leitungen freigegeben wird. Nach erfolgtem Einlegen federn die Stegteile 7 und 8 wieder in die in Fig. 3 gezeigte geschlossene Stellung zurück.

Bei dem in den Fig. 1-4 gezeigten Ausführungsbeispiel verlaufen die beiden Stegteile 7 und 8 im wesentlichen auf gleicher Höhe. Der Stegteil 8 weist an seinem dem Stegteil 7 gegenüberliegenden Ende eine stufenförmige Absenkung 9 auf, die sich unter das gegenüberliegende Ende des Stegteils 7 erstreckt. Auf diese Weise ist der die Leitungen aufnehmende Raum auch nach oben über seine gesamte Breite hin abgeschlossen.

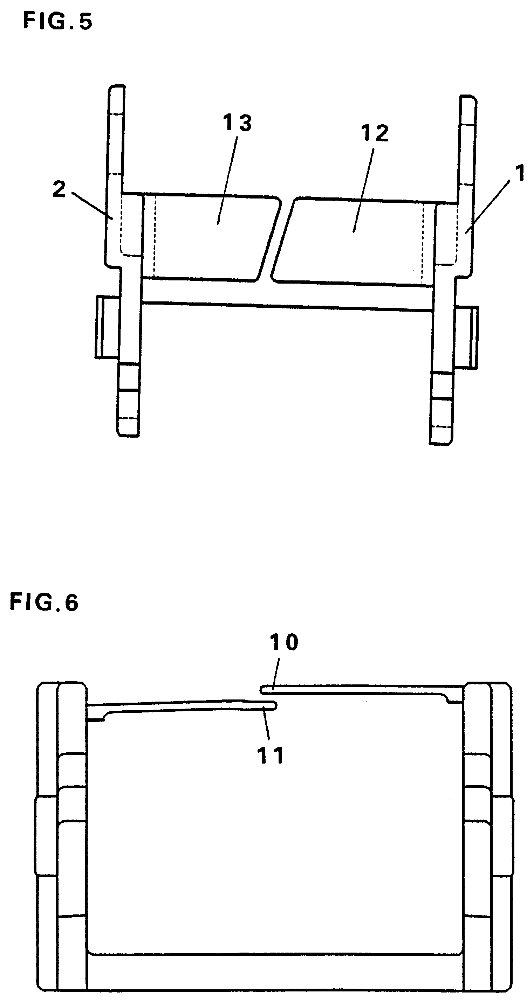

Dieser Abschluß kann auch dadurch erreicht werden, daß die beiden Stegteile 10 und 11 des unterbrochenen Querstegs, wie in Fig. 6 gezeigt, auf unterschiedlicher Höhe an den Wangen 1 und 2 angeordnet sind, so daß die sich gegenüberliegenden Enden der beiden Stegteile 10 und 11 übereinanderliegen.

Bei den in den Fig. 1-4 und 6 dargestellten Ausführungsbeispielen verläuft die Trennung zwischen den beiden Stegteilen 7 und 8 bzw. 10 und 11 in Längsrichtung der Kette.

Es kann andererseits vorteilhaft sein, wenn die Trennung, wie in Fig. 5 gezeigt, geneigt zur Längsrichtung der Kette verläuft. Die beiden Stegteile 12 und 13 laufen mit zueinander abgewandten spitzen Bereichen aufeinander zu, die beim Eindrücken leichter nachgeben.

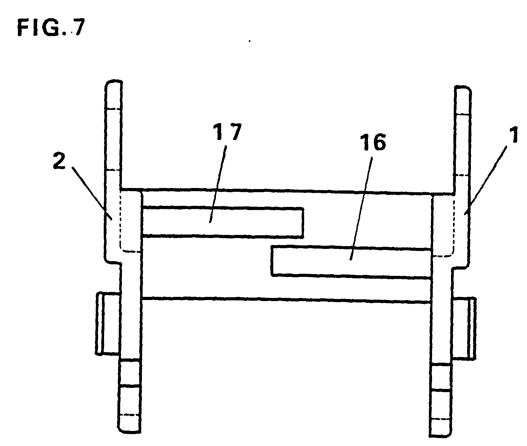

Darüber hinaus kann es vorteilhaft sein, die Stegteile, wie die in Fig. 7 gezeigten Stegteile 16 und 17, seitlich versetzt zueinander anzuordnen.

Um zu verhindern, daß die aufgrund der unterbrochenen Querstege 4 verhältnismäßig elastischen Kettenglieder bei Biege und/oder Verdrehbeanspruchung der Laschen 1 und 2 aus ihrer Gelenkverbindung ausrasten, weisen die Bolzen 5 an ihren freien Enden umlaufende Verbreiterungen 14 auf, deren größter Durchmesser größer ist als derjenige der Öffnungen 6. Die Verbreiterungen 14 sind so ausgebildet, daß die Zapfen 5 rastend durch die Öffnungen 6 hindurchgreifen und unter Aufbringung einer bestimmten Kraft aus diesen wieder gelöst werden können. Zum Zwecke des Einrastens und Lösens hat die Verbreiterung 14 eine bauchige Oberfläche 15, die sich vom zylinderförmigen Teil des Zapfens 5 aus erstreckt.

### Bezugszeichenliste

- 1: Kettenlasche
- 2: Kettenlasche
- 3: unterer Quersteg
- 4: oberer Quersteg
- 5: Zapfen
- 6: Öffnung
- 7: Stegteil
- 8: Stegteil
- 9: stufenförmige Absenkung
- 10: Stegteil
- 11: Stegteil
- 12: Stegteil
- 13: Stegteil
- 14: Verbreiterung
- 15: bauchige Oberfläche
- 16: Stegteil
- 17: Stegteil

## Patentansprüche

1. Energiekette zur Führung von Schläuchen, Kabeln o. dgl. zwischen einem festen und einem beweglichen Anschlußpunkt, deren Kettenglieder eine leichte, dünnwandige Konstruktion aus jeweils zwei Kettenlaschen (1, 2) und mindestens einem diese verbindenden Quersteg (3, 4) aufweisen, wobei die Kettenlaschen (1, 2) benachbarter Kettenglieder durch an den Laschen jeweils eines Kettenglieds angeformte Zapfen (5), die durch korrespondierende Öffnungen (6) in den Laschen des anderen Kettenglieds greifen, gelenkig miteinander verbunden sind und wobei die Energiekette eine verdrehelastische und/oder in seitlicher Richtung biegeelastische Konstruktion aufweist und zum Einfügen der Zapfen eines Kettenglieds in die Öffnungen des benachbarten Kettenglieds eine elastische Verformung der betreffenden Laschenbereiche erforderlich ist, **dadurch gekennzeichnet**, daß die Zapfen (5) als zusätzliche Sicherung gegen unbeabsichtigtes Lösen bei Beanspruchung der Kette an ihrem Umfang Rastmittel aufweisen, mit denen die Zapfen (5) rastend in die Öffnungen (6) eingreifen und unter Aufbringung einer bestimmten Kraft aus den Öffnungen (6) wieder lösbar sind.

2. Energiekette nach Anspruch 1, **dadurch gekennzeichnet**, daß die im Gelenkbereich gegenüberliegenden Laschen (1) bzw. (2) ohne axiales Spiel aneinander anliegen.

3. Energiekette nach Anspruch 2, **dadurch gekennzeichnet**, daß die am Umfang der Zapfen (5) angeordneten Rastmittel die im Gelenkbereich aneinanderliegenden Laschen (1 bzw. 2) unter einer geringen Vorspannung aneinanderdrücken.

4. Energiekette nach einem der Ansprüche 1 bis 3, **dadurch gekennzeichnet**, daß die an den Zapfen (5) vorgesehenen Rastmittel als umlaufende Verbreiterungen (14) an den freien Enden der Zapfen (5) ausgebildet sind.

5. Energiekette nach Anspruch 4, **dadurch gekennzeichnet**, daß die Verbreiterungen (14) eine bauchige Oberfläche (15) aufweisen, die sich von einem zylinderförmigen Teil des Zapfens (5) aus erstreckt.

6. Energiekette nach Anspruch 4 oder 5, **dadurch gekennzeichnet**, daß die Öffnungen (6) an ihren nach außen liegenden Enden Erweiterungen aufweisen, in die sich die Verbreiterungen (14) an den freien Enden der Zapfen (5) hineinerstrecken, so daß die Stirnseite der Zapfen (5) im wesentlichen fluchtend mit den Außenseiten der Laschen (1, 2) angeordnet ist.

7. Energiekette nach einem der Ansprüche 1 bis 6 mit einem unterbrochenen Quersteg (4), **dadurch gekennzeichnet**, daß die beiden Teile (7, 8) des unterbrochenen Querstegs (4) auf gleicher Höhe verlaufen und durch einen schmalen Spalt voneinander getrennt sind.

8. Energiekette nach Anspruch 7, **dadurch gekennzeichnet**, daß ein Teil (8) des unterbrochenen Querstegs (4) an seinem dem anderen Teil (7) gegenüberliegenden Ende eine stufenförmige Absenkung (9) aufweist, die sich unter das gegenüberliegende Ende des anderen Teils (7) erstreckt.

9. Energiekette nach einem der Ansprüche 1 bis 6 mit einem unterbrochenen Quersteg (4), **dadurch gekennzeichnet**, daß die beiden Teile (10, 11) des unterbrochenen Querstegs auf unterschiedlicher Höhe verlaufen und ihre Enden übereinanderliegend angeordnet sind.

10. Energiekette nach einem der Ansprüche 1 bis 6 mit einem unterbrochenen Quersteg (4), **dadurch gekennzeichnet**, daß die Kettenlaschen (1, 2) und der diese verbindende Quersteg (3) aus einem relativ steifen Werkstoff und der unterbrochene Quersteg (4) aus einem relativ weichelastischen, federnden Werkstoff bestehen.

## Claims

1. Energy chain for guiding hoses, cables and the like between a fixed and a moveable connection point, whose chain links are of a lightweight, thin-walled design, each consisting of two chain straps (1, 2) and at least one cross-member (3, 4) connecting them, where the chain straps (1, 2) of adjacent chain links are joined in pivoting fashion by pegs (5) integrally moulded on the straps of one chain link which reach through corresponding openings (6) in the straps of the other chain links, and where the energy chain is designed to be torsionally elastic and/or flexurally elastic in the lateral direction, elastic deformation of the corresponding strap areas being necessary to insert the pegs of one chain link into the openings in the adjacent chain link, **characterised in that**, as an additional safeguard against unintentional separation when the chain is placed under stress, the pegs (5) display snap-in elements around their circumference, with which the pegs (5) engage the openings (6) in locking fashion and which can be released from the openings (6) by applying a certain force.

2. Energy chain as per Claim 1, **characterised in that** the straps (1 and 2) opposite to each other in the joint area make contact with each other without axial clearance.

3. Energy chain as per Claim 2, **characterised in that** the snap-in elements on the circumference of the pegs (5) press together the contiguous straps (1 and 2) in the joint area under slight pretension.

4. Energy chain as per one of the Claims 1 to 3, **characterised in that** the snap-in elements provided on the pegs (5) are designed as all-round wider areas (14) on the free ends of the pegs (5).

5. Energy chain as per Claim 4, **characterised in that** the wider areas (14) display a bellied surface (15), extending from a cylindrical part of the peg (5).

6. Energy chain as per Claim 4 or 5, **characterised in that** the outer ends of the openings (6) display extensions into which the wider areas (14) on the free ends of the pegs reach, with the result that the face end of the pegs (5) is essentially in flush alignment with the outer sides of the straps (1, 2).

7. Energy chain as per one of the Claims 1 to 6, with a discontinuous cross-member (4), **characterised in that** the two elements (7, 8) of the discontinuous cross-member (4) lie on the same level and are separated from each other by a narrow gap.

8. Energy chain as per Claim 7, **characterised in that** the end of one element (8) of the discontinuous cross-member (4) which faces the other element (7) has a downward step (9) which reaches under the opposite end of the other element.

9. Energy chain as per one of the Claims 1 to 6, with a discontinuous cross-member (4), **characterised in that** the two elements (10, 11) of the discontinuous cross-member lie on different levels and their ends are located one above the other.

10. Energy chain as per one of the Claims 1 to 6, with a discontinuous cross-member (4), **characterised in that** the chain straps (1, 2) and the cross-member (3) connecting them are made of a relatively rigid material and the discontinuous cross-member (4) is made of a relatively flexible, resilient material.

## Revendications

1. Chaîne de guidage, destinée au guidage de tuyaux, de câbles, ou similaires, entre un point de raccordement fixe et un point de raccordement mobile, dont les maillons de chaîne présentent une construction légère à parois minces, formées respectivement de deux joues de chaîne (1, 2), et d'au moins une barrette transversale (3, 4) qui relie ces joues, les joues de chaîne (1, 2) de maillons voisins étant reliées les unes aux autres de façon articulée au moyen de tourillons (5) respectivement formés sur les joues et traversant des ouvertures correspondantes (6) dans les joues de l'autre maillon de chaîne, et la chaîne de guidage présentant une construction élastique vis-à-vis de la torsion et/ou une construction élastique en flexion en direction latérale, et pour l'introduction des tourillons d'un maillon de chaîne dans les ouvertures du maillon de chaîne voisin une déformation élastique des régions concernées des joues est nécessaire, caractérisée en ce que, en tant que sécurité additionnelle à l'encontre d'un détachement inopiné lors d'une sollicitation de la chaîne, les tourillons (5) comportent des organes d'enclenchement à leur périphérie, au moyen desquels les tourillons (5) s'engagent par enclenchement dans les ouvertures (6), et peuvent être à nouveau détachés hors des ouvertures (6) en appliquant une force déterminée.

2. Chaîne de guidage selon la revendication 1, caractérisée en ce que les joues (1) et (2) opposées dans la région d'articulation sont appliquées les unes sur les autres sans jeu axial.

3. Chaîne de guidage selon la revendication 2, caractérisée en ce que les organes d'enclenchement agencés à la périphérie des tourillons (5) repoussent sous légère précontrainte les joues (1 et 2) appliquées l'une contre l'autre dans la région d'articulation.

4. Chaîne de guidage selon l'une des revendications 1 à 3, caractérisée en ce que les organes d'enclenchement prévus sur les tourillons (5) sont formés comme des élargissements périphériques (14) aux extrémités libres des tourillons (5).

5. Chaîne de guidage selon la revendication 4, caractérisée en ce que les élargissements (14) présentent une surface bombée (15) qui s'étend depuis une partie cylindrique du tourillon (5).

6. Chaîne de guidage selon l'une ou l'autre des revendications 4 et 5, caractérisée en ce que les ouvertures (6) comportent, à leur extrémité extérieure, des élargissements dans lesquels s'étendent les élargissements (14) aux extrémités libres des tourillons (5), de sorte que la face frontale des tourillons (5) est agencée sensiblement en affleurement avec les faces extérieures des joues (1, 2).

7. Chaîne de guidage selon l'une des revendications 1 à 6, comprenant une barrette transversale interrompue (4), caractérisée en ce que les deux parties (7, 8) de la barrette transversale interrompue (4) s'étendent à la même hauteur, et sont séparées l'une de l'autre par une fente étroite.

8. Chaîne de guidage selon la revendication 7, caractérisée en ce qu'une partie (8) de la barrette transversale interrompue (4) présente à son extrémité opposée à l'autre partie (7) un renfoncement (9) en forme de gradins, qui s'étend au-dessous de l'extrémité opposée de l'autre partie (7).

9. Chaîne de guidage selon l'une des revendications 1 à 6, comprenant une barrette transversale interrompue (4), caractérisée en ce que les deux parties (10, 11) de la barrette transversale interrompue (4) s'étendent à des hauteurs différentes, et en ce que leurs extrémités sont agencées l'une au-dessous de l'autre.

10. Chaîne de guidage selon l'une des revendications 1 à 6, comprenant une barrette transversale interrompue (4), caractérisée en ce que les joues de chaîne (1, 2), et la barrette transversale (3) qui relie celle-ci, sont réalisées en matériau relativement rigide, et en ce que la barrette transversale interrompue (4) est réalisée en un matériau élastique relativement souple.
